# EUROPEAN PATENT SPECIFICATION

(11) **EP 2 102 710 B1**
(45) Date of publication and mention of the grant of the patent: **05.09.2012**
(21) Application number: 07863417.7
(22) Date of filing: 17.10.2007
(51) Int. Cl.: G03F 7/00, G05D 1/00, G06F 17/00

(54) **STRATEGY FOR CONTROL OF RECIRCULATED EXHAUST GAS TO NULL TURBOCHARGER BOOST ERROR**
STRATEGIE ZUR STEUERUNG VON REZIRKULIERTEM ABGAS ZUM AUSNULLEN DES TURBOLADER-BOOST-FEHLERS
STRATEGIE DE COMMANDE DE GAZ D'ECHAPPEMENT RECYCLES DESTINEE A ELIMINER TOUTE ERREUR DE SURALIMENTATION DE TURBOCOMPRESSEUR

(30) Priority: 02.10.2006 US 537794
(43) Date of publication of application: 23.09.2009
(73) Proprietor: International Engine Intellectual Property Company, LLC., Warrenville, IL 60555 (US)
(72) Inventor: DE OJEDA, Wiliam, Chicago, Illinois 60622 (US)
(74) Representative: Kuhnen & Wacker
(86) International application number: PCT/US2007/081627
(87) International publication number: WO 2008/048998

(56) References cited:
- EP-A1- 1 024 272
- EP-A2- 1 031 719
- GB-A- 2 406 394
- US-A1- 2002 100 460
- US-A1- 2003 192 518
- US-B1- 6 378 515
- US-B2- 6 401 700
- US-B2- 6 401 700

## Description

### Field of the Invention

This invention relates to turbocharged internal combustion engines, particularly a motor vehicle diesel engine that in addition to having a turbocharger for developing boost has exhaust gas recirculation control.

### Background of the Invention

Turbocharged diesel engines are powerplants of many trucks that are presently being manufactured in North America, with single- and two-stage turbochargers being representative of those used. A two-stage turbocharger comprises high- and low-pressure turbines in series flow relationship in the exhaust system that operate high- and low-pressure compressors in series flow relationship in the intake system to develop boost is one example of a turbocharger. A single-stage stage turbocharger has only a single turbine and a single compressor.

The high-pressure turbine of a particular type of two-stage turbocharger has vanes that can be controlled by an actuator to control both torque that operates the high-pressure compressor and exhaust back-pressure. A single-stage turbocharger can also have a variable geometry turbine for boost and exhaust back-pressure control. Such turbochargers are sometimes called variable geometry turbochargers, or VGT's for short.

Sometimes, bypass valves are associated with the high-pressure compressor and turbine stages of a two-stage turbocharger and controlled in conjunction with VGT control. As described in US 6,401,700

For various reasons that bear on engine performance and/or emission control, the ability to accurately control boost is important to an engine control strategy. A typical strategy processes various data to develop a data value for a desired set-point for boost. Changes in engine operation that affect that set-point typically call for the control system to respond promptly and accurately to force the actual boost to follow the changes in the desired set-point.

Engine accelerations and decelerations create transient conditions where actual boost may temporarily lower or higher than appropriate. While a processor-based engine control system can rapidly process data, mechanical devices controlled by the control system may have slower response characteristics, and one example of this is turbo lag.

Such limitations can have unfavorable implications for engine/vehicle performance and also for tailpipe emissions. Consequently, a control strategy that can minimize undesirable consequences of such limitations on engine performance and tailpipe emissions in certain situations would be a meaningful improvement in engine/vehicle technology.

### Summary of the Invention

The present invention is directed to such a control strategy.

Principles of the invention can be embodied in an engine control strategy without the inclusion of additional mechanical devices, making implementation of the inventive strategy cost-effective. Moreover, the favorable effect on tailpipe emissions can make a meaningful contribution toward compliance with applicable laws and regulations.

Briefly, when actual boost deviates from a desired boost set-point developed by a boost control strategy, such as during a sudden acceleration or deceleration, the inventive strategy provides a prompt adjustment of exhaust gas deceleration, the inventive strategy provides a prompt adjustment of exhaust gas recirculation (EGR) seeking to null out the boost disparity. To accomplish this several calculations are made. Before discussing them, some discussion of the EGR control system and the turbocharger control system is appropriate.

The strategy for control of the EGR valve establishes a desired EGR set-point based on several parameters, including engine speed, indicated engine torque, and mass flow rate of fresh air entering the intake system. A typical EGR valve is controlled by a duty-cycle signal that is based on the EGR set-point. Changes in the EGR set-point change the duty cycle of the duty signal through a controller, typically a PID (proportional-integral-derivative) controller embodied as a virtual controller in the processing strategy. The response characteristics of any particular PID controller are typically determined during engine development to accommodate acceptable EGR valve response over relevant engine operating conditions that include steady-state conditions, i.e. non-transient conditions, and changing conditions, i.e. transient conditions.

The strategy for control of turbocharger boost establishes a desired boost set-point based on several parameters, including engine speed and indicated engine torque. The boost set-point is processed by a control strategy for controlling the turbocharger, specifically controlling the position of the vanes of a VGT turbocharger. Vane position is typically controlled by an actuator to which a duty-cycle signal based on boost set-point is applied. The duty-cycle signal may also be developed by a PID controller in the boost control strategy.

Because the response characteristic of a PID controller is often the result of a compromise between various operating conditions to enable the controller to perform reasonably satisfactorily for essentially all engine operating conditions, a PID controller may not provide quick enough response for certain more extreme transients that are more severe than slowly changing ones. Sudden accelerations and decelerations are examples of more extreme transients, and they may affect tailpipe emissions in undesirable ways. Principles of the present invention can ameliorate the adverse effect of such transients on tailpipe emissions.

In accordance with those principles, various calculations are made. One calculation performed by a suitably appropriate algorithm uses actual boost to provide the mass flow rate through the engine cylinders. Another calculation, performed in any suitably appropriate way, provides the actual mass flow rate of fresh air entering the engine intake system. The mass flow rate of recirculated exhaust gas that entrains with the fresh air entering the intake system is then calculated as the difference between the calculated mass flow rate through the engine cylinders and the actual mass flow rate of fresh air entering the intake system.

The EGR valve is modeled in such a way that for certain prevailing conditions that bear on mass flow rate through the EGR valve, such as exhaust gas temperature and pressure differential between the valve inlet and outlet, a correlation between mass flow rate through the valve and the extent to which the valve is open is defined.

To null out the boost disparity during a sudden acceleration or deceleration, the control system uses the correlation between flow rate through the EGR valve and the extent to which the EGR valve is open to define an adjustment for the valve opening that will adjust the mass flow through the EGR valve in a way that seeks to null out the boost discrepancy.

For example, when more boost is needed for engine acceleration, the EGR valve will be promptly operated in its closing direction to quickly reduce the mass flow rate of exhaust gas through the EGR valve so that less exhaust gas is introduced into the engine cylinders. Because engine fueling is being quickly increased to accelerate the engine, the quickly reduced amount of EGR facilitates the ensuing in-cylinder combustion processes and turbocharger operation in accordance with the strategy seeking to null the boost discrepancy as the engine accelerates. Quick response of the EGR is accomplished by using a feed-forward strategy by-passing the EGR PID controller. A significant reduction in tailpipe smoke can be noticed.

When less boost is needed, the EGR valve will be promptly operated in its opening direction to quickly increase the mass flow rate of exhaust gas through the EGR valve so that more exhaust gas is introduced into the engine cylinders. The quickly increased amount of EGR can limit NOₓ formation. Quick response of the EGR is accomplished by using the feed-forward strategy by-passing the EGR PID controller.

One generic aspect of the present invention relates to a method for coordinating control of exhaust gas recirculation from a exhaust system of a turbocharged internal combustion engine to an intake system of the engine with control of engine boost.

The method comprises: developing data representing the mass flow rate of fresh air that is entering the intake system; calculating data representing the mass flow rate of recirculated exhaust gas that is entraining with the fresh air entering the intake system by calculating data representing mass flow rate through the engine cylinders and calculating the difference between the data representing the calculated mass flow rate through the engine cylinders and the data representing the mass flow rate of fresh air entering the intake system; calculating data representing expected mass flow rate through the engine cylinders that would occur if boost were equal to a desired set-point; calculating data representing actual mass flow rate through the engine cylinders using actual boost; calculating data representing the difference between the data representing actual mass flow rate through the engine cylinders and the data representing the expected mass flow rate through the engine cylinders; and using the data representing the difference between the data representing actual mass flow rate through the engine cylinders and the data representing the expected mass flow rate through the engine cylinders as a feed-forward adjustment of the mass flow rate of recirculated exhaust gas in a direction of adjustment that seeks to null out the difference between desired boost set point and actual boost.

A further generic aspect of the present invention relates to an engine system comprising an engine having cylinders, a turbocharger, an intake system, including a compressor of the turbocharger, for delivering charge air to the engine cylinders, an exhaust system, including a turbine of the turbocharger, for conveying exhaust gas from the engine cylinders, an exhaust gas recirculation system, including an EGR valve, for recirculating exhaust gas from the exhaust system to the intake system, and a control system.

The control system coordinates control of exhaust gas recirculation and comprises a processor for: a) developing data representing the mass flow rate of fresh air that is entering the intake system, b) calculating data representing the mass flow rate of recirculated exhaust gas that is entraining with the fresh air entering the intake system by calculating data representing mass flow rate through the engine cylinders and calculating the difference between the data representing the calculated mass flow rate through the engine cylinders and the data representing the mass flow rate of fresh air entering the intake system, c) calculating data representing expected mass flow rate through the engine cylinders that would occur if boost were equal to a desired set-point, d) calculating data representing actual mass flow rate through the engine cylinders using actual boost, and e) calculating data representing the difference between the data representing actual mass flow rate through the engine cylinders and the data representing the expected mass flow rate through the engine cylinders.

The control system performs feed-forward adjustment of the mass flow rate of recirculated exhaust gas in a direction of adjustment that seeks to null out the difference between desired boost set point and actual boost by processing the data representing the difference between the data representing actual mass flow rate through the engine cylinders and the data representing the expected mass flow rate through the engine cylinders to develop a feed-forward adjustment signal that is applied to the EGR valve to cause the adjustment.

### Brief Description of the Drawings

Figure 1 is a general schematic diagram of a motor vehicle engine system.

Figure 2 is a graph plot useful in explaining an aspect of the inventive strategy.

Figure 3 is a schematic diagram illustrating principles of the inventive strategy.

Figure 4 is another graph plot useful in explaining the inventive strategy.

Figure 5 is another graph plot useful in explaining the inventive strategy.

Figure 6 shows a series of data traces representing various parameters affected by the inventive strategy.

Figure 7 shows another series of data traces representing various parameters affected by the inventive strategy.

### Description of the Preferred Embodiment

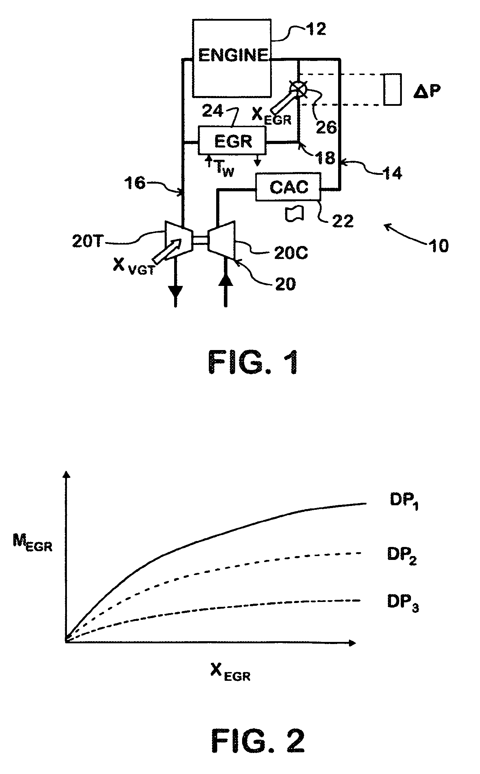

Figure 1 shows an exemplary internal combustion engine system 10 comprising an engine 12 containing cylinders in which combustion occurs, an intake system 14 through which charge air can enter engine 12 and an exhaust system 16 through which exhaust gasses resulting from combustion of air-fuel mixtures in the cylinders exit. An EGR system 18 provides for exhaust gas to be recirculated from exhaust system 16 to intake system 14.

Engine system 10 is representative of a turbocharged diesel engine comprising a turbocharger 20 that has turbine 20T in exhaust system 16 operating a compressor 20C in intake system 14. A charge air cooler 22 is downstream of compressor 20C.

EGR system 18 comprises an EGR cooler 24 through which exhaust gas passes before reaching an EGR valve 26 that is controlled by a duty-cycle signal applied to an electric actuator of the valve to set the extent to which the EGR valve is open.

The inventive strategy is embodied in one or more processors of an engine control system as algorithms for processing data. Through control of EGR valve 26 in coordination with control of boost, sudden transients have less adverse effect on tailpipe emissions.

The strategy includes modeling EGR valve 26 such that for certain prevailing conditions, such as exhaust gas temperature and pressure differential across the valve, that bear on mass flow rate through the valve, a correlation between mass flow rate through the valve and the extent to which the valve is open is defined. Figure 2 shows an example of valve modeling where the vertical axis represents mass flow rate through the valve M_{EGR} and the horizontal axis represents an amount of valve opening.

A first plot DP₁ defines a relationship between mass flow rate and valve opening at a certain differential pressure DP₁. A second plot DP₂ defines a relationship between mass flow rate and valve opening at another differential pressure DP₂. A third plot DP₃ defines a relationship between mass flow rate and valve opening at still another differential pressure DP₃.

Thus data storage in the processors of the control system may be populated with data defining data values for X_{EGR} each correlated with a respective pair of data values for differential pressure and mass flow rate.

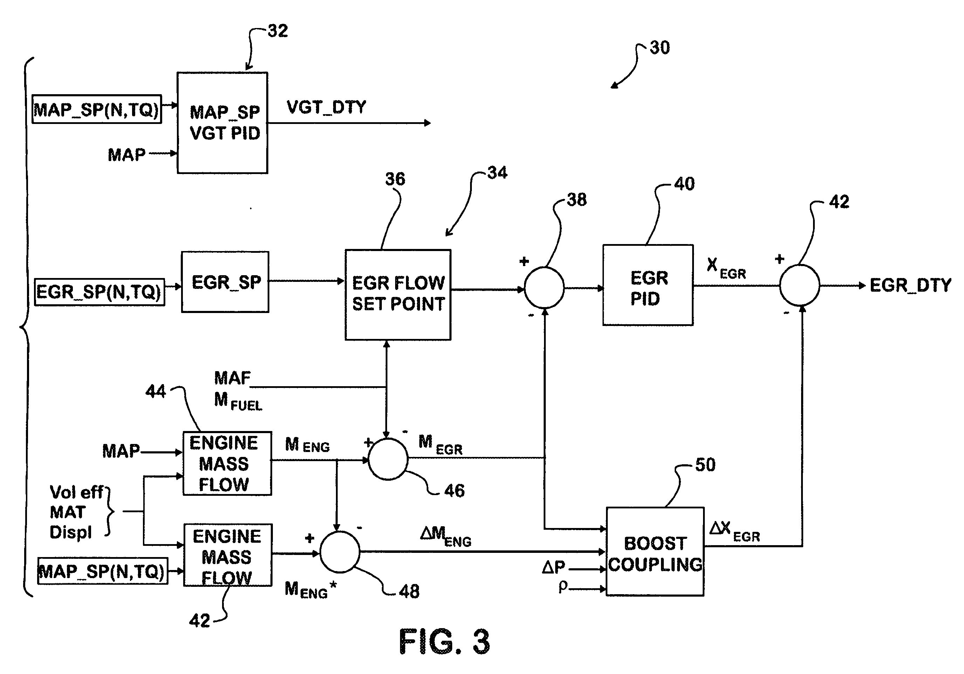

Knowing how EGR valve 26 has been modeled, attention is directed to Figure 3 for more explanation of the strategy 30.

A general turbocharger control strategy is designated by the reference numeral 32. Vanes of turbine 20T are positioned by a duty cycle signal VGT_DTY applied to an actuator that sets vane position. Strategy 32 seeks to position the vanes so that compressor 20C develops boost corresponding to a desired boost set-point represented by a parameter MAP_SP(N,TQ). The control system uses engine speed N and indicated engine torque TQ to select an appropriate data value for MAP_SP(N,TQ) from a map for processing by strategy 32. Strategy 32 contains a closed-loop controller that compares a data value for actual boost, parameter MAP, with the desired set-point to develop an error signal that is processed to create a value for VGT_DTY that will secure correspondence of actual boost to the desired set-point.

The EGR control strategy is designated by the reference numeral 34. A desired set-point for EGR is represented by a parameter EGR_SP which like the boost set-point depends on engine speed N and indicated engine torque TQ, with the control system selecting an appropriate data value for EGR_SP from a map for processing by strategy 34. A portion of the processing designated by the reference numeral 36 processes not only EGR_SP but also data representing engine fueling, parameter M_{fuel}, and the mass flow rate of fresh air entering intake system 14, parameter MAF. A data value for MAP is calculated in any suitably appropriate way, such as by converting a MAF sensor output into a corresponding data value.

The result of processing 36 is used as one input to an algebraic summing function 38 that provides output data X_{EGR} to an EGR PID controller 40 that in turn provides an input to another algebraic summing function 42. It is the output of summing function 42 that sets the duty cycle signal EGR_DTY applied to the actuator of EGR valve 26.

Strategy 34 comprises a suitably appropriate algorithm 44 that develops a data value for actual mass flow rate through engine 12, represented by a parameter M_{eng}. The data value for M_{eng} is an input to an algebraic summing function 46. Actual mass flow is a function of several variables shown here as boost (MAP), air temperature (MAT), volumetric efficiency (Vol eff), and engine displacement (Displ). It is data values for those parameters that are processed by algorithm 44 to develop the data value for M_{eng}.

Strategy 34 further comprises a suitably appropriate algorithm 47 that develops a data value for mass flow rate through engine 12 that is based on the same variables processed by algorithm 44 except for MAP. Instead of using MAP, algorithm 47 uses desired boost set-point MAP_SP(N,TQ). The result provided by algorithm 47 is represented by a parameter m_{eng}*. The data value for M_{eng}* is an input to an algebraic summing function 48.

Summing function 48 calculates the difference between M_{eng} and M_{eng}*. The difference is represented by a parameter ΔM_{ENG} that is one of several inputs for a boost coupling algorithm 50. This algorithm performs calculations that yield a data value for a parameter ΔX_{EGR} that is subtracted by summing function 42 from the data value for X_{EGR} provided by EGR PID controller 40.

Summing function 46 calculates the mass flow rate through EGR valve 26, represented by a parameter M_{EGR}, by subtracting from the data value for M_{eng} the data values for MAF and M_{fuel}. The data value for M_{EGR} is another input to algorithm 50. It is also subtracted by summing function 38 from the data value calculated by processing 36.

Additional inputs for algorithm 50 are parameters ΔP the pressure across the EGR valve and ρ density

During steady-state and near steady-state operation of the engine, there is little or no disparity between the data values for ΔM_{ENG} and M_{EGR}. As a result, boost coupling strategy 50 provides little or no adjustment of EGR via ΔX_{EGR} because the data value for ΔX_{EGR} is small or zero. The EGR mass flow rate error input to EGR PID controller 42 provides closed-loop control of EGR that continually forces the EGR rate toward the set-point EGR_SP.

During non-steady-state operation that is significantly more non-steady-state that merely near steady-state (sudden accelerations and decelerations for example), the disparity between the data values for ΔM_{ENG} and M_{EGR} becomes significant. As a result, boost coupling strategy 50 provides adjustment of EGR via ΔX_{EGR} because the data value for ΔX_{EGR} has now become significant. EGR PID controller 42 still provides a closed-loop component to control of EGR by virtue of ΔX_{EGR}, but the additional component provided by ΔX_{EGR} is quickly reflected in EGR_DTY because it is not delayed by the slower response that is inherent in the compromised design of the PID controller.

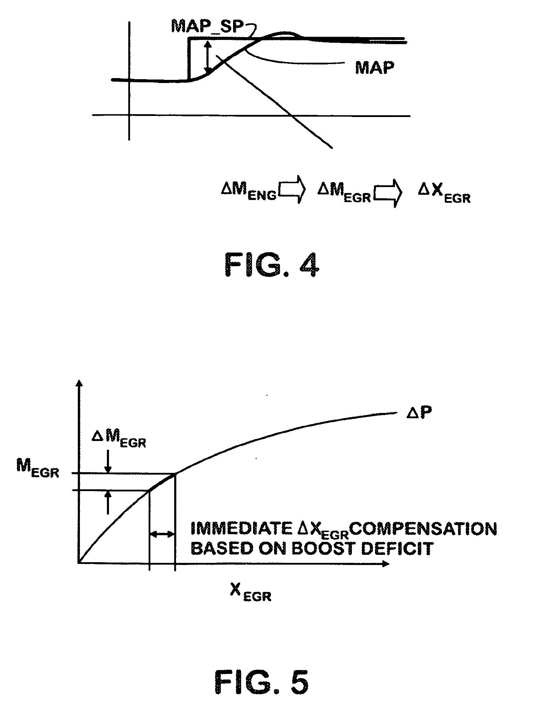

The strategy is graphically portrayed by Figures 4 and 5. When the desired boost set-point suddenly changes, as shown by the step in MAP_SP in Figure 4, actual MAP changes as portrayed by the trace labeled MAP. The change in flow rate ΔM_{ENG} creates a data value for ΔM_{EGR} that requires a corresponding change in valve opening ΔX_{EGR}. M_{EGR} is processed by algorithm 50 to define the location on the appropriate ΔP plot where the EGR valve is presently operating. ΔM_{EGR} defines the amount of change in EGR mass flow rate that is needed, and use of the valve model embodied as stored data in the processing system converts the change to a change in valve opening. The disparity in boost (difference between actual boost and desired boost set-point) may be considered as a boost deficit that can be either positive or negative. The invention provides immediate feed-forward adjustment of the EGR valve because the strategy bypasses PID controller 40 when applying ΔX_{EGR} to the EGR valve. The signal EGR_DTY may be considered a composite signal composed of a closed-loop component from the PID controller 40 and an open-loop, feed-forward component from algorithm 50.

In a motor vehicle powered by engine system 10, a sudden depression of the acceleration pedal by the driver will cause EGR valve 26, if open, to be promptly operated in the direction of closing quickly reducing the mass flow rate of exhaust gas through the EGR valve. The immediate effect is a corresponding reduction in exhaust gas being introduced into the engine cylinders. Because engine fueling is being quickly increased to accelerate the engine, the quickly reduced amount of EGR facilitates the ensuing in-cylinder combustion processes and turbocharger operation toward more quickly nulling out the boost discrepancy as the engine accelerates.

A sudden deceleration, like that resulting from release of the accelerator, will quickly drop the desired boost set-point. The inventive strategy causes EGR valve 26 to be promptly operated in its opening direction to quickly increase the mass flow rate of exhaust gas through the EGR valve so that more exhaust gas is introduced into the engine cylinders. The quickly increased amount of EGR can limit NOₓ formation during the deceleration.

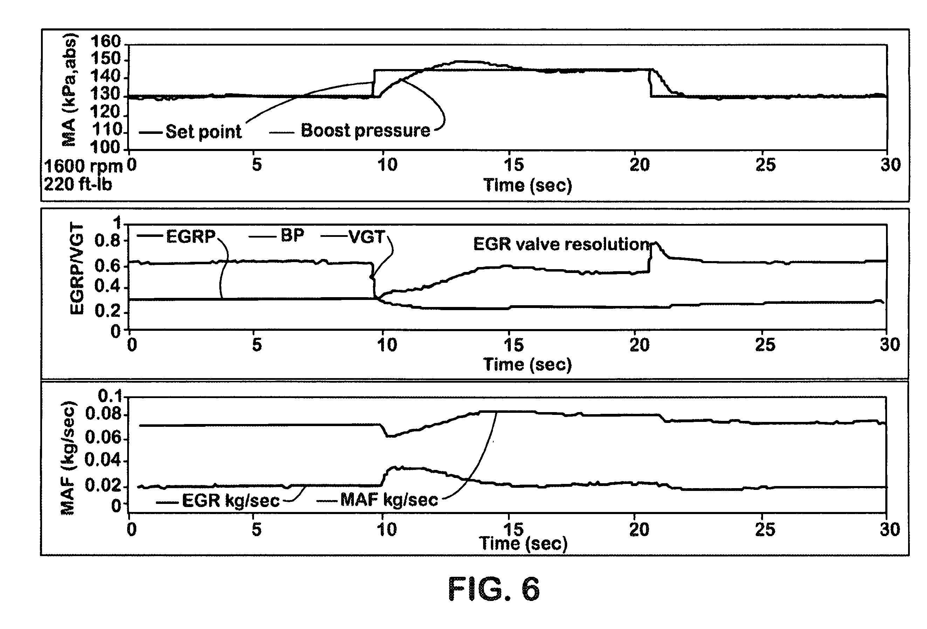

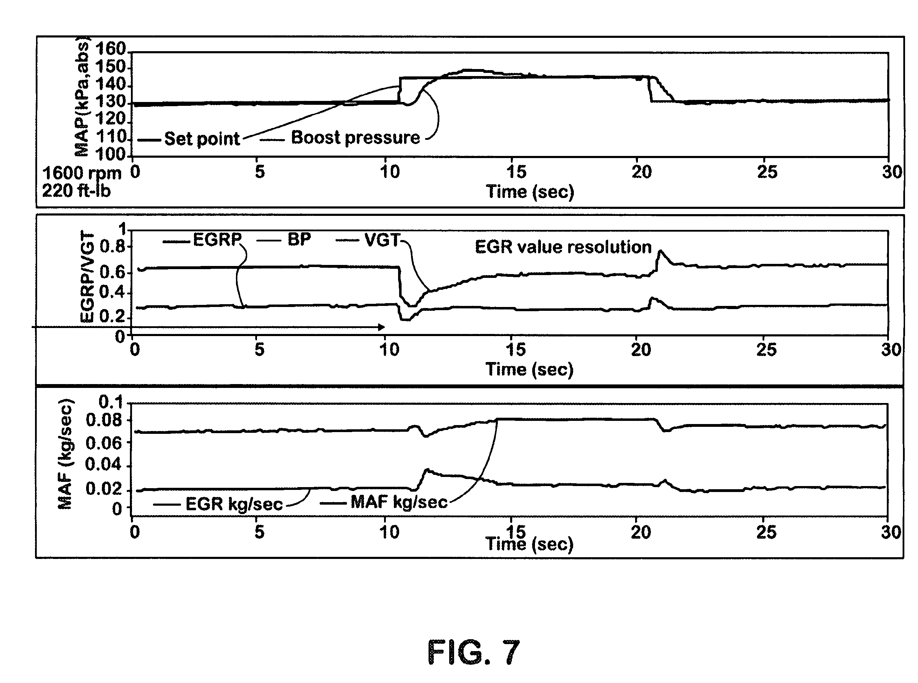

A comparison of the traces shown in Figure 6 with those shown in Figure 7 are representative of the effectiveness of the inventive strategy during an acceleration. The traces marked "set-point" and "boost pressure" in both Figures show that a sudden increase in the desired set-point will cause boost to increase to the higher desired set-point in about two seconds, and to slightly overshoot before settling at the new set point. When the desired set-point suddenly drops to the original set-point, boost drops off to the original in about one second.

In both Figures 6 and 7, the traces marked EGRP and VGT represent the amount of ERG valve opening and turbocharger vane position respectively, and the traces marked EGR and MAF represent the ERG mass flow rate and fresh air mass flow rate respectively. The traces EGRP, VGT, EGR and MAF in Figure 6 show how the sudden changes in desired boost set-point affect the respective parameters in a typical engine system that does not have the inventive strategy. The traces EGRP, VGT, EGR and MAF in Figure 7 show how the sudden changes in desired boost set-point affect the respective parameters in a typical engine system that does have the inventive strategy.

## Claims

1. A method for coordinating control of exhaust gas recirculation (18) from a exhaust system (16) of a turbocharged internal combustion engine (12) to an intake system (14) of the engine with control of engine boost, the method comprising:
developing data (MAF) representing the mass flow rate of fresh air that is entering the intake system;
calculating data (M_{EGR}) representing the mass flow rate of recirculated exhaust gas that is entraining with the fresh air entering the intake system by calculating data (M_{eng}) representing actual mass flow rate through the engine cylinders and calculating the difference between the data representing the calculated mass flow rate through the engine cylinders and the data representing the mass flow rate of fresh air entering the intake system;
calculating data (M_{eng}*) representing expected mass flow rate through the engine cylinders that would occur if boost were equal to a desired set-point (MAP_SP(N,TQ));
calculating data (M_{eng}) representing actual mass flow rate through the engine cylinders using actual boost (MAP);
calculating data (ΔM_{ENG}) representing the difference between the data representing actual mass flow rate through the engine cylinders and the data representing the expected mass flow rate through the engine cylinders; and **characterized in that**
using the data representing the difference between the data representing actual mass flow rate through the engine cylinders and the data representing the expected mass flow rate through the engine cylinders as a feed-forward adjustment of the mass flow rate of recirculated exhaust gas in a direction of adjustment that seeks to null out the difference between desired boost set point and actual boost.

2. A method as set forth in Claim 1 comprising controlling the mass flow rate of recirculated exhaust gas by controlling an EGR valve by a composite control signal comprising a closed-loop control component and a feed-forward control component corresponding to the data representing the difference between the data representing actual mass flow rate through the engine cylinders and the data representing the expected mass flow rate through the engine cylinders.

3. A method as set forth in Claim 2 comprising developing the closed-loop control component by applying an error signal to a PID controller that outputs the closed-loop control component, and developing the error signal by subtracting the calculated data representing the mass flow rate of recirculated exhaust gas that is entraining with the fresh air entering the intake system from a desired set-point for mass flow rate of recirculated exhaust gas.

4. A method as set forth in Claim 3 comprising developing the desired set-point for mass flow rate of recirculated exhaust gas from data that includes: data representing engine speed; data representing indicated engine torque; and the data representing the mass flow rate of fresh air that is entering the intake system.

5. A method as set forth in Claim 2 comprising developing the feed-forward control component by processing data that includes: the data representing the difference between the data representing actual mass flow rate through the engine cylinders and the data representing the expected mass flow rate through the engine cylinders; and the data representing the mass flow rate of recirculated exhaust gas that is entraining with the fresh air entering the intake system.

6. An engine system (10) comprising:
an engine (12) having cylinders;
a turbocharger (20T);
an intake system (14), including a compressor (20C) of the turbocharger, for delivering charge air to the engine cylinders;
an exhaust system (16), including a turbine of the turbocharger, for conveying exhaust gas from the engine cylinders;
an exhaust gas recirculation system (18), including an EGR valve (26), for recirculating exhaust gas from the exhaust system to the intake system;
and a control system for coordinating control of exhaust gas recirculation comprising a processor for:
a) developing data (MAF) representing the mass flow rate of fresh air that is entering the intake system,
b) calculating data (M_{EGR}) representing the mass flow rate of recirculated exhaust gas that is entraining with the fresh air entering the intake system by calculating data (M_{eng}) representing actual mass flow rate through the engine cylinders and calculating the difference between the data representing the calculated mass flow rate through the engine cylinders and the data representing the mass flow rate of fresh air entering the intake system,
c) calculating data (M_{eng}*) representing expected mass flow rate through the engine cylinders that would occur if boost were equal to a desired set-point (MAP_SP(N,TQ)),
d) calculating data (M_{eng}) representing actual mass flow rate through the engine cylinders using actual boost (MAP),
e) calculating data (ΔM_{ENG}) representing the difference between the data representing actual mass flow rate through the engine cylinders and the data representing the expected mass flow rate through the engine cylinders, and **characterized in that**
performing feed-forward adjustment of the mass flow rate of recirculated exhaust gas in a direction of adjustment that seeks to null out the difference between desired boost set point and actual boost by processing the data representing the difference between the data representing actual mass flow rate through the engine cylinders and the data representing the expected mass flow rate through the engine cylinders to develop a feed-forward adjustment signal that is applied to the EGR valve to cause the adjustment.

7. An engine system as set forth in Claim 6 wherein the control system comprises a closed-loop controller for developing a closed-loop control signal that is algebraically summed with the feed-forward adjustment signal to create a composite control signal that is applied to the EGR valve.

8. An engine system as set forth in Claim 7 wherein the closed-loop controller comprises a PID controller to which is applied an error signal developed by subtracting the calculated data representing the mass flow rate of recirculated exhaust gas that is entraining with the fresh air entering the intake system from a desired set-point for mass flow rate of recirculated exhaust gas.

9. An engine system as set forth in Claim 8 wherein the control system develops the desired set-point for mass flow rate of recirculated exhaust gas from data that includes: data representing engine speed; data representing indicated engine torque; and the data representing the mass flow rate of fresh air that is entering the intake system.

10. An engine system as set forth in Claim 7 wherein the control system develops the feed-forward adjustment signal by processing data that includes: the data representing the difference between the data representing actual mass flow rate through the engine cylinders and the data representing the expected mass flow rate through the engine cylinders; and the data representing the mass flow rate of recirculated exhaust gas that is entraining with the fresh air entering the intake system.

## Patentansprüche

1. Verfahren zum Koordinieren einer Steuerung einer Abgasrückführung (18) aus einem Abgassystem (16) eines turbogeladenen Verbrennungsmotors (12) in ein Einlasssystem (14) des Motors mit einer Ladedrucksteuerung für den Motor, wobei das Verfahren folgende Schritte aufweist:
Entwickeln von Daten (MAF), die die Massendurchflussrate von Frischluft darstellen, die in das Einlasssystem eintritt;
Berechnen von Daten (M_{EGR}), die die Massendurchflussrate eines rückgeführten Abgases darstellen, das mit der in das Einlasssystem eintretenden Frischluft mitgeführt wird, indem Daten (M_{eng}) berechnet werden, die die Ist-Massendurchflussrate durch die Motorzylinder darstellen, und indem die Differenz zwischen den Daten, die die berechnete Massendurchflussrate durch die Motorzylinder darstellen, und den Daten, die die Massendurchflussrate der in das Einlasssystem eintretenden Frischluft darstellen, berechnet wird.
Berechnen von Daten (M_{eng*}), die die erwartete Massendurchflussrate durch die Motorzylinder darstellen, die auftreten würde, wenn ein Ladedruck einem gewünschten Soll-Punkt entspräche (MAP_SP(N,TQ));
Berechnen von Daten (M_{eng}), die die Ist-Massendurchflussrate durch die Motorzylinder darstellen, unter Verwendung eines Ist-Ladedrucks (MAP);
Berechnen von Daten (ΔM_{ENG}), die die Differenz zwischen den Daten, die die Ist-Massendurchflussrate durch die Motorzylinder darstellen, und den Daten, die die erwartete Massendurchflussrate durch die Motorzylinder darstellen; und **dadurch gekennzeichnet, dass**
die Daten verwendet werden, die die Differenz zwischen den Daten, die die Ist-Massendurchflussrate durch die Motorzylinder darstellen, und den Daten, die die erwartete Massendurchflussrate durch die Motorzylinder darstellen, als eine Vorwärtskopplungs-Anpassung der Massendurchflussrate des rückgeführten Abgases in einer Richtung der Anpassung darstellen, in der versucht wird, die Differenz zwischen dem gewünschten Ladedruck-Sollpunkt und dem Ist-Ladedruck zu eliminieren.

2. Verfahren nach Anspruch 1, aufweisend den Schritt des Steuerns der Massendurchflussrate des rückgeführten Gases, indem ein AGR-Ventil durch ein zusammengesetztes Steuersignal gesteuert wird, das eine Regelkreis-Steuerungskomponente und eine Vorwärtskopplungs-Steuerungskomponente aufweist, die den Daten entspricht, die die Differenz zwischen den Daten, die die Ist-Massendurchflussrate durch die Motorzylinder darstellen, und den Daten, die die erwartete Massendurchflussrate durch die Motorzylinder darstellen, darstellen.

3. Verfahren nach Anspruch 2, aufweisend den Schritt des Entwickelns der Regelkreis-Steuerungskomponente durch Anlegen eines Fehlersignals an einem PID-Controller, der die Regelkreis-Steuerungskomponente ausgibt, und des Entwickelns des Fehlersignals durch Subtrahieren der berechneten Daten, die die Massendurchflussrate des rückgeführten Abgases darstellen, das mit der in das Einlasssystem eintretenden Frischluft mitgeführt wird, von einem gewünschten Sollpunkt für eine Massendurchflussrate des rückgeführten Abgases.

4. Verfahren nach Anspruch 3, aufweisend den Schritt des Entwickelns des gewünschten Sollpunkts für eine Massendurchflussrate des rückgeführten Abgases von Daten, die beinhalten: Daten, die die Motordrehzahl darstellen; Daten, die das angezeigte Motordrehmoment darstellen; und die Daten, die die Massendurchflussrate von Frischluft darstellen, die in das Einlasssystem eintritt.

5. Verfahren nach Anspruch 2, aufweisend den Schritt des Entwickelns der Vorwärtskopplungs-Steuerungskomponente durch Verarbeiten von Daten, die beinhalten: die Daten, die die Differenz zwischen den Daten, die die Ist-Massendurchflussrate durch die Motorzylinder darstellen, und den Daten, die die erwartete Massendurchflussrate durch die Motorzylinder darstellen, darstellen; und die Daten, die die Massendurchflussrate des rückgeführten Abgases darstellen, das mit der in das Einlasssystem eintretenden Frischluft mitgeführt wird.

6. Motorsystem (10), aufweisend:
einen Motor (12) mit Zylindern;
einen Turbolader (20T);
ein Einlasssystem (14), das einen Kompressor (20C) des Turboladers beinhaltet,
zum Liefern von Ladeluft in die Motorzylinder;
ein Auslasssystem (16), das eine Turbine des Turboladers beinhaltet, zum Fördern eines Abgases aus den Motorzylindern;
ein Abgasrückführsystem(18), das ein AGR-Ventil (26) beinhaltet, zum Rückführen von Abgas aus dem Abgassystem in das Einlasssystem;
und ein Steuersystem zum Koordinieren einer Steuerung der Abgasrückführung mit einem Prozessor zum:
a) Entwickeln von Daten (MAF), die die Massendurchflussrate von Frischluft darstellen, die in das Einlasssystem eintritt,
b) Berechnen von Daten (M_{EGR}), die die Massendurchflussrate des rückgeführten Abgases darstellen, das mit der in das Einlasssystem eintretenden Frischluft mitgeführt wird, indem Daten (M_{eng}) berechnet werden, die die Ist-Massendurchflussrate durch die Motorzylinder darstellen, und indem die Differenz zwischen den Daten, die die berechnete Massendurchflussrate durch die Motorzylinder darstellen, und den Daten, die die Massendurchflussrate der in das Einlasssystem eintretenden Frischluft darstellen, berechnet wird,
c) Berechnen von Daten (M_{eng*}), die die erwartete Massendurchflussrate durch die Motorzylinder, die auftreten würde, wenn der Ladedruck einem gewünschten Sollpunkt (MAP_SP(N, TQ)) entspräche, darstellen,
d) Berechnen von Daten (M_{eng}), die die Ist-Massendurchflussrate durch die Motorzylinder darstellen unter Verwendung des Ist-Ladedrucks (MAP),
e) Berechnen von Daten (ΔM_{ENG}), die die Differenz zwischen den Daten, die die Ist-Massendurchflussrate durch die Motorzylinder darstellen, und den Daten, die die erwartete Massendurchflussrate durch die Motorzylinder darstellen, darstellen und das **dadurch gekennzeichnet, dass**
eine Vorwärtskopplungsanpassung der Massendurchflussrate des rückgeführten Abgases in einer Richtung der Anpassung ausgeführt wird, in der versucht wird, die Differenz zwischen dem gewünschten Ladedruck-Sollpunkt und dem Ist-Ladedruck zu eliminieren, indem die Daten verarbeitet werden, die die Differenz zwischen den Daten, die die Ist-Massendurchflussrate durch die Motorzylinder darstellen, und den Daten, die die erwartete Massendurchflussrate durch die Motorzylinder darstellen, darstellen, um ein Vorwärtskopplungs-Anpassungssignal, das an das AGR-Ventil angelegt wird, zu entwickeln, um die Anpassung zu bewirken.

7. Motorsystem nach Anspruch 6, wobei das Steuersystem einen Regelkreis-Controller zum Entwickeln eines Regelkreis-Steuerungssignals aufweist, das algebraisch mit dem Vorwärtskopplungs-Anpassungssignal summiert wird, um ein zusammengesetztes Steuersignal zu erzeugen, das am AGR-Ventil angelegt wird.

8. Motorsystem nach Anspruch 7, wobei der Regelkreis-Controller einen PID-Controller aufweist, an dem ein Fehlersignal angelegt wird, das durch Subtrahieren der berechneten Daten, die die Massendurchflussrate des rückgeführten Gases darstellen, das mit der in das Einlasssystem eintretenden Frischluft mitgeführt wird, von einem gewünschten Sollpunkt für die Massendurchflussrate des rückgeführten Abgases entwickelt wird.

9. Motorsystem nach Anspruch 8, wobei das Steuersystem den gewünschten Sollpunkt für die Massendurchflussrate des rückgeführten Abgases anhand von Daten entwickelt, die enthalten: Daten, die die Motordrehzahl darstellen; Daten, die das angezeigte Motordrehmoment darstellen; und die Daten, die die Massendurchflussrate der Frischluft darstellen, die in das Einlasssystem eintritt.

10. Motorsystem nach Anspruch 7, wobei das Steuersystem das Vorwärtskopplungs-Anpassungssignal durch Verarbeiten von Daten entwickelt, die enthalten: die Daten, die die Differenz zwischen den Daten, die die Ist-Massendurchflussrate durch die Motorzylinder darstellen, und den Daten, die die erwartete Massendurchflussrate durch die Motorzylinder darstellen, darstellen; und die Daten, die die Massendurchflussrate des rückgeführten Abgases darstellen, das mit der in das Einlasssystem eintretenden Frischluft mitgeführt wird.

## Revendications

1. Procédé de coordination de la commande de la recirculation (18) de gaz d'échappement d'un système (16) d'échappement d'un moteur (12) à combustion interne suralimenté à un système (14) d'admission du moteur avec commande de la suralimentation du moteur, procédé dans lequel :
on développe une donnée (MAF) représentant le débit massique d'air frais qui entre dans le système d'admission;
on calcule une donnée (M_{EGR}) représentant le débit massique du gaz d'échappement recirculé qui est entraîné avec l'air frais entrant dans le système d'admission, en calculant une donnée (M_{eng}) représentant le débit massique réel passant dans les cylindres du moteur et en calculant la différence entre la donnée représentant le débit massique calculé passant dans les cylindres du moteur et la donnée représentant le débit massique d'air frais entrant dans le système d'admission;
on calcule une donnée (M_{eng}*) représentant le débit massique auquel on s'attend passant dans les cylindres du moteur qui se produirait si la suralimentation était égale à un point de réglage(MAP_SP(N,TQ)) souhaité;
on calcule une donnée (M_{eng}) représentant le débit massique réel passant dans les cylindres du moteur en utilisant la suralimentation (MAP) réelle;
on calcule une donnée (ΔM_{ENG}) représentant la différence entre la donnée représentant le débit massique réel passant dans les cylindres du moteur et la donnée représentant le débit massique auquel on s'attend passant dans les cylindres du moteur; et
**caractérisé**
**en ce qu'**on utilise la donnée représentant les différences entre le débit massique réel passant dans les cylindres du moteur et la donnée représentant le débit massique auquel on s'attend passant dans les cylindres du moteur comme ajustement d'avance d'alimentation du débit massique de gaz d'échappement recirculé, dans un sens d'ajustement qui cherche à annuler la différence entre le point de réglage souhaité de la suralimentation et la suralimentation réelle.

2. Procédé suivant la revendication 1, dans lequel on commande le débit massique de gaz d'échappement recirculé en commandant une vanne EGR par un signal de commande composite comprenant une composante de commande en boucle fermée et une composante de commande d'avance d'alimentation correspondant à la donnée représentant la différence entre la donnée représentant un débit massique réel passant dans les cylindres du moteur et la donnée représentant le débit massique auquel on s'attend passant dans les cylindres du moteur.

3. Procédé suivant la revendication 2, dans lequel on développe la composante de commande en boucle fermée en appliquant un signal d'erreur à une unité de commande PID qui sort la composante de commande en boucle fermée et en développant le signal d'erreur en soustrayant la donnée calculée représentant le débit massique de gaz d'échappement recirculé, qui est entraîné avec l'air frais entrant dans le système d'admission, d'un point de réglage souhaité du débit massique de gaz d'échappement recirculé.

4. Procédé suivant la revendication 3, dans lequel on développe le point de réglage souhaité du débit massique de gaz d'échappement recirculé à partir d'une donnée qui comprend : une donnée représentant un régime du moteur; une donnée représentant un couple indiqué du moteur; et la donnée représentant le débit massique d'air frais qui entre dans le système d'admission.

5. Procédé suivant la revendication 2, dans lequel on développe la composante de commande d'avance d'alimentation en traitant une donnée qui comprend : la donnée représentant la différence entre la donnée représentant le débit massique réel passant dans les cylindres du moteur et la donnée représentant le débit massique auquel on s'attend passant dans les cylindres du moteur; et la donnée représentant le débit massique de gaz d'échappement recirculé qui est entraîné avec l'air frais entrant dans le système d'admission.

6. Système (10) de moteur comprenant :
un moteur (12) ayant des cylindres;
un turbocompresseur (20T);
un système (14) d'admission comprenant un compresseur (20C) du turbocompresseur, pour envoyer de l'air d'alimentation aux cylindres du moteur;
un système (16) d'échappement comprenant une turbine du turbocompresseur, pour acheminer du gaz d'échappement provenant des cylindres du moteur;
un système (18) de recirculation de gaz d'échappement comprenant une vanne (26) EGR, pour recirculer du gaz d'échappement du système d'échappement au système d'admission;
et un système de commande pour coordonner la commande de la recirculation des gaz d'échappement comprenant un processeur pour :
a) développer une donnée (MAF) représentant le débit massique d'air frais qui entre dans le système d'admission;
b) calculer une donnée (M_{EGR}) représentant le débit massique du gaz d'échappement recirculé qui est entraîné avec l'air frais entrant dans le système d'admission, en calculant une donnée (M_{eng}) représentant le débit massique réel passant dans les cylindres du moteur et en calculant la différence entre la donnée représentant le débit massique calculé passant dans les cylindres du moteur et la donnée représentant le débit massique d'air frais entrant dans le système d'admission;
c) calculer une donnée (M_{eng*}) représentant le débit massique auquel on s'attend passant dans le cylindre du moteur qui se produirait si la suralimentation était égale à un point de réglage(MAP_SP(N,TQ)) souhaité;
d) calculer une donnée (M_{eng}) représentant le débit massique réel passant dans les cylindres du moteur en utilisant la suralimentation (MAP) réelle;
e) calculer une donnée (ΔM_{ENG}) représentant la différence entre la donnée représentant le débit massique réel passant dans les cylindres du moteur et la donnée représentant le débit massique auquel on s'attend passant dans les cylindres du moteur; et
**caractérisé**
**en ce qu'**on effectue un ajustement d'avance de charge du débit massique de gaz d'échappement recirculé, dans le sens d'un ajustement qui cherche à annuler la différence entre le point de réglage souhaité de la suralimentation et la suralimentation réelle, en traitant la donnée représentant la différence entre la donnée représentant le débit massique réel passant dans les cylindres du moteur et la donnée représentant le débit massique auquel on s'attend passant dans les cylindres du moteur pour développer un signal d'ajustement d'avance d'alimentation qui est appliqué à la vanne EGR pour provoquer l'ajustement.

7. Système de moteur suivant la revendication 6, dans lequel le système de commande comprend une unité de commande en boucle fermée pour développer un signal de commande en boucle fermée qui est sommé algébriquement avec le signal d'ajustement d'avance d'alimentation pour créer un signal de commande composite qui est appliqué à la vanne EGR.

8. Système de moteur suivant la revendication 7, dans lequel l'unité de commande en boucle fermée comprend une unité de commande PID à laquelle est appliqué un signal d'erreur développé en soustrayant la donnée calculée représentant le débit massique de gaz d'échappement recirculé, qui est entraîné avec l'air frais entrant dans le système d'admission, d'un point de réglage souhaité du débit massique de gaz d'échappement recirculé.

9. Système de moteur suivant la revendication 8, dans lequel le système de commande développe le point de réglage souhaité du débit massique de gaz d'échappement recirculé à partir de données qui comprennent : une donnée représentant un régime du moteur; une donnée représentant un couple indiqué du moteur;
et la donnée représentant le débit massique d'air frais qui entre dans le système d'admission.

10. Système de moteur suivant la revendication 7, dans lequel le système de commande développe le signal d'ajustement d'avance d'alimentation en traitant une donnée qui comprend :
la donnée représentant la différence entre la donnée représentant le débit massique réel passant dans les cylindres du moteur et la donnée représentant le débit massique auquel on s'attend passant dans les cylindres du moteur; et la donnée représentant le débit massique de gaz d'échappement recirculé qui est entraîné avec l'air frais entrant dans le système d'admission.
